# EUROPÄISCHE PATENTSCHRIFT

(11) **EP 0 670 199 B1**
(45) Veröffentlichungstag und Bekanntmachung des Hinweises auf die Patenterteilung: **23.04.1997**
(21) Anmeldenummer: 95100734.3
(22) Anmeldetag: 20.01.1995
(51) Int. Cl.: B25B 27/00, F16D 41/20, B21J 15/04

(54) **Blindnietmutter-Setzgerät**
Setting tool for blind rivet nuts
Appareil pour la pose des écrous à rivets aveugles

(30) Priorität: 04.03.1994 DE 4406946
(43) Veröffentlichungstag der Anmeldung: 06.09.1995
(73) Patentinhaber: GESIPA Blindniettechnik Gesellschaft mit beschränkter Haftung, D-60528 Frankfurt (DE)
(72) Erfinder: Wille, Lothar, D-64546 Mörfelden-Walldorf (DE)
(74) Vertreter: Knoblauch, Andreas, Dr.-Ing.

(56) Entgegenhaltungen:
- WO-A-93/22081
- FR-A- 1 449 755
- FR-A- 2 274 377
- GB-A- 2 098 528
- GB-A- 2 140 727
- US-A- 2 723 777
- US-A- 3 838 588

## Beschreibung

Die Erfindung betrifft ein Blindnietmutter-Setzgerät mit einer Zugspindel, einem Motor, einem ersten Antriebsstrang zwischen Motor und Zugspindel zum Erzeugen einer Rotationsbewegung der Zugspindel, wobei der erste Antriebsstrang unterbrechbar ist, und einem zweiten Antriebsstrang, wobei der zweite Antriebsstrang einen Antriebsteil und einen Abtriebsteil aufweist und der Antriebsteil auf einer Bewegungsbahn bewegbar ist, die einen Leerhub gegenüber dem Abtriebsteil und einen Nutzhub aufweist.

Blindnietmuttern weisen einen Nietschaft mit einem Innengewinde und einen Setzkopf auf. Der Nietschaft wird durch eine Bohrung in einem Werkstück geführt, in dem die Blindnietmutter befestigt werden soll. Während der Setzkopf in Anlage an das Material gehalten wird, wird über einen in das Gewinde eingeschraubten Zugdorn eine axiale Zugkraft auf den Nietschaft ausgeübt. Diese Zugkraft führt einerseits zu einer Stauchung des Nietschaftes, andererseits auch zu seiner Auswölbung zu einer Art Schließkopf, so daß die Blindnietmutter nach Art eines Blindniets in dem Material befestigt wird. Selbstverständlich können auch mehrere Materiallagen mit Hilfe einer derartigen Blindnietmutter verbunden werden. Nach Herausschrauben des Zugdornes steht dann ein Gewinde in dem Werkstück zur Verfügung, das zu Befestigungszwecken für andere Teile verwendet werden kann.

Da der Zugdorn zunächst in die Blindnietmutter hineingeschraubt werden und nach dem Setzvorgang herausgeschraubt werden muß, besteht der Arbeitsablauf beim Setzen der Blindnietmutter praktisch aus drei Schritten: Drillvorgang, Setzvorgang und Rückstellvorgang. Der Drillvorgang muß hierbei rechtzeitig beendet werden und mit einem definierten Moment erfolgen. Wenn die Blindnietmutter mit ihrem Setzkopf nach dem Einschrauben des Zugdornes am Mundstück des Blindnietmutter-Setzgeräts anliegt, würde ein weiteres Eindrillen zu einer vorzeitigen Stauchung des Nietschaftes führen. Der Setzvorgang muß ebenfalls möglichst genau gesteuert werden. Wenn der Setz- oder Nutzhub zu klein ist, ist die Blindnietmutter nicht mit der notwendigen Festigkeit in dem Werkstück befestigt worden. Ist er hingegen zu groß, kann er zu einer Beschädigung der Blindnietmutter führen, was ebenfalls die Zuverlässigkeit der Befestigung drastisch herabsetzen kann. Schließlich muß der Rückstellvorgang so erfolgen können, daß der Zugdorn mit dem notwendigen Drehmoment aus der Blindnietmutter herausgeschraubt werden kann.

Man hat daher in EP 0 119 007 A2 ein Blindnietmutter-Setzgerät angegeben, das im ersten Antriebsstrang eine ratschenartige Kupplung aufweist, d.h. eine Kupplung, die bei Erreichen eines vorbestimmten Drehmoments in eine Richtung einen Schlupf erlaubt. Über die Kupplung läßt sich demnach der Zugdorn drehen und in die Blindnietmutter einschrauben, wobei die Kupplung nach der Anlage der Blindnietmutter an das Mundstück des Blindnietmutter-Setzgeräts durchrutscht, während der Zugdorn bei einer Drehung in umgekehrter Richtung mit dem vollen Moment aus der Blindnietmutter herausgeschraubt wird. Auf ihrer Antriebsseite ist die Kupplung über eine Stange, die nach Art einer Gewindespindel aufgebaut ist, mit einem Motor verbunden. Auf der Gewindespindel ist ein Schieber angeordnet, der sich bei einer Drehung der Gewindespindel axial verschiebt. Nach einem Leerhub gelangt er zur Anlage an einen Anschlag eines Käfigs. Der Käfig wiederum kann Zugkräfte auf den Zugdorn ausüben. Der gesamte Käfig wird nun durch den Schieber verschoben, bis er seinerseits an einen Anschlag gerät. Dieser Anschlag kann durch Zwischenlage von Distanzscheiben verändert werden, wodurch die Länge des Nutzhubs eingestellt werden kann.

Ein weiteres Blindnietmutter-Setzgerät ist aus DE 19 45 820 U1 bekannt. Hier gibt es einen Antriebsmotor, der nur in einer Richtung drehbar ist. Die Umsteuerung erfolgt über ein Richtungswechselgetriebe. Beim Setzen der Blindnietmutter muß das Gerät axial zusammengedrückt werden, um die notwendigen Teile miteinander in Eingriff zu bringen. Auch hier ist eine Rutschkupplung vorgesehen, die die zum Eindrillen notwendige Drehbewegung unterbricht, wenn der Zugdorn weit genug in das Gewinde der Blindnietmutter hineingeschraubt worden ist. Ferner ist ein Drehmomentbegrenzer vorgesehen, der den Antrieb der Zugspindel unterbricht, wenn die Kraft zur Ausbildung des Schließkopfes die notwendige Größe erreicht hat.

In beiden Fällen ist es relativ schwierig, die Güte der Befestigung der Blindnietmutter bei wechselnden Blindnietgrößen sicher zu stellen. Im ersten Fall ist hierbei das Auswechseln einer Distanzscheibe erforderlich, durch die der Nutzhub begrenzt werden soll. Da hierzu eine Demontage des Blindnietmutter-Setzgeräts erforderlich ist, wird man dies in der Praxis wohl nicht mit der notwendigen Sorgfalt und Regelmäßigkeit durchführen. Im zweiten Fall ist man auf die Güte des Drehmomentbegrenzers angewiesen. Erfahrungsgemäß kann sich aber bei der dargestellten Ausführungsform das Grenz-Drehmoment ändern, beispielsweise durch Verschmutzung. Auch in diesem Fall leidet die Zuverlässigkeit der Verbindung der Blindnietmutter mit dem Material.

Der Erfindung liegt die Aufgabe zugrunde, ein Blindnietmutter-Setzgerät anzugeben, mit dem man zuverlässig Blindnietmuttern setzen kann.

Diese Aufgabe wird bei einem Blindnietmutter-Setzgerät der eingangs genannten Art dadurch gelöst, daß der Endpunkt der Bewegungsbahn fest vorgegeben ist, daß der Nutzhub unmittelbar am Endpunkt endet und daß der Leerhub veränderbar ist.

Der Nutzhub ist ein Parameter, der für die Zuverlässigkeit der Verbindung zwischen Blindnietmutter und Material von großer Bedeutung ist. Er muß allerdings in Abhängigkeit von der zu verwendenden Blindnietmutter und des zu vernietenden Materials gewählt werden. Die richtige Einstellung des Nutzhubs gewährleistet eine entsprechend zuverlässige Verbindung. Der gesamte Hub des Antriebsteils unterteilt sich in einen Leerhub und in einen Nutzhub. Der Nutzhub bildet das Ende der Bewegungsbahn und zwar unabhängig davon, wie groß er ist. Die Amplitude oder die Größe des Nutzhubs wird also über den Leerhub eingestellt. Da der Nutzhub immer an der gleichen Stelle endet, kann man zuverlässig überwachen, ob der vollständige Nutzhub durchgeführt worden ist. Hierfür reichen einfache Mittel, etwa Sensoren oder Endlagenschalter aus. Je größer der Nutzhub ist, desto kleiner wird der Leerhub und umgekehrt. Solange sich das Antriebsteil im Leerhub bewegt, kann man einen Teil der Antriebsleistung des Motors dazu verwenden, über den ersten Antriebsstrang die Zugspindel zu drehen, um sie in die Blindnietmutter einzuschrauben. Man läßt also gleichzeitig eine axiale Bewegung des Antriebsteils und eine Rotationsbewegung der Zugspindel zu.

Vorzugsweise ist eine Steuereinrichtung vorgesehen, die den Motor in die entgegengesetzte Richtung umsteuert, sobald der Antriebsteil den Endpunkt der Bewegungsbahn erreicht. Die Steuereinrichtung kann hierzu beispielsweise einen Endlagenschalter aufweisen, der einen Umschalter zur Richtungsänderung des Motors betätigt. Der Bediener hat hierbei eine einfache Kontrolle darüber, ob die Blindnietmutter mit dem nötigen Setzhub gesetzt worden ist. Dies ist insbesondere dann von Vorteil, wenn der Motor elektrisch betrieben ist und über eine Batterie oder einen Akkumulator gespeist wird. Wenn die Ladung der Batterie oder des Akkumulators zu Ende geht, kann es sein, daß die Zugspindel den notwendigen Nutz- oder Setzhub nicht mehr vollständig ausführen kann. Dies kann unter Umständen vom Bediener nicht bemerkt werden. Er könnte in diesem Fall das Anhalten darauf zurückführen, daß der Nutzhub vollständig ausgeführt worden ist, während es in Wirklichkeit darauf zurückzuführen ist, daß die Batterie oder der Akkumulator leer sind. Sobald also die Umsteuerung ausbleibt, weiß der Bediener, daß die Verbindung nicht in Ordnung ist. Er kann die Blindnietmutter entfernen und eine neue Blindnietmutter einsetzen oder er kann mit einem erneuten Setzvorgang die Blindnietmutter richtig befestigen.

Bevorzugterweise weist der erste Antriebsstrang eine Schlingfederkupplung als richtungsabhängig wirkende Rutschkupplung auf. Eine derartige Schlingfederkupplung liegt am anzutreibenden Teil an und überträgt das Drehmoment durch Reibung. Bei einer Belastung in eine Richtung wird sie sozusagen aufgedrillt und hebt sich von dem anzutreibenden Teil ab. Die Schlingfeder rutscht dann über das anzutreibende Teil, ohne es mitzunehmen. Wird hingegen die Schlingfeder in die andere Drehrichtung belastet, zieht sie sich um das anzutreibende Teil zusammen und überträgt das Drehmoment praktisch ohne Verluste. Mit dieser Art von Kupplung wird einerseits verhindert, daß die Blindnietmutter beim Einschrauben des Zugdorns überlastet wird, wenn der Setzkopf zur Anlage an das Blindnietmutter-Setzgerät kommt. Andererseits wird ein problemloses Ausschrauben des Zugdornes nach dem Setzen der Blindnietmutter ermöglicht, auch wenn das Ausschrauben aufgrund der Stauchung etwas schwerer geht.

Vorzugsweise weist der erste Antriebsstrang zusätzlich eine ausrückbare Kupplung auf. Auch diese Maßnahme ist insbesondere dann von Vorteil, wenn man Energie sparen möchte. Die ausrückbare Kupplung trennt den Motor von dem Rotationsantrieb der Zugspindel ohne zu Reibungsverlusten zu führen, wie das bei herkömmlichen Rutsch- oder Ratschenkupplungen der Fall ist. Das volle Moment des Motors kann dann zum Aufbringen der Zugkraft verwendet werden.

Mit Vorteil rückt die ausrückbare Kupplung bei einer vorbestimmten Position des Antriebsteils aus, wobei der Antriebsteil diese Position noch während des Leerhubs erreicht. Hierdurch wird sichergestellt, daß die Rotation des Zugdorns auf jeden Fall aufhört, bevor der Nutzhub beginnt. Während des Nutzhubes entstehen damit keine Reibungsverluste durch eine Rutschkupplung. Hier zeigt sich der besondere Vorteil der Anordnung des Nutzhubes am Ende der Bewegungsbahn. Während des Anfangsteils der Bewegungsbahn, in dem sich der Leerhub befindet, kann man problemlos den Zugdorn rotieren lassen. Erst am Ende der Bewegungsbahn, also wenn die ausrückbare Kupplung positionsabhängig ausgerückt worden ist und der Nutzhub beginnt, konzentriert man sich vollständig auf das Aufbringen der Zugkraft. Die Entkopplung der beiden Bewegungen hat einen geringeren Stromverbrauch zur Folge, was insbesondere bei der Verwendung von Akkumulatoren oder Batterien von Vorteil ist.

Vorzugsweise weist die ausrückbare Kupplung zwei axial gegeneinander bewegbare Teile auf, die im eingerückten Zustand um mehr als 200° gegeneinander verdrehbar sind. Während das Ausrücken der Kupplung normalerweise keine Schwierigkeit bereitet, da hier lediglich eine ausreichend große Axialkraft auf das auszurückende Teil aufzubringen ist, kann das Einrücken der Kupplung Schwierigkeiten bereiten. Es muß nämlich möglich sein, daß das ausgerückte Teil in Eingriff mit dem festen Teil kommt. Durch die Möglichkeit, daß die beiden Teile um mehr als 200°, insbesondere um etwa 240°, gegeneinander verdrehbar sind, hat das ausgerückte Teil einen Zeitraum zum axialen Vorschub zur Verfügung, der eine Umdrehung von mehr als 200° entspricht. In diesem Zeitraum kann das ausgerückte Teil in der Regel weit genug vordringen, um mit dem festen Teil in Eingriff zu kommen. Die Bewegungsmöglichkeit im eingerückten Zustand ist Vernachlässigbar, da hier keine wiederholten Richtungsänderungen stattfinden. Vielmehr wird die Drehrichtung in der Regel bis zum Ende der Bewegung beibehalten.

Vorzugsweise ist der Antriebsteil axial fest mit einer Drehstange verbunden, die mit dem ausrückbaren Teil der Kupplung drehfest verbunden ist, wobei die Drehstange einen Axialanschlag aufweist, bis zu dem hin das ausrückbare Teil der Kupplung und die Drehstange axial gegeneinander bewegbar sind. Über die Drehstange erfolgt sozusagen die Verbindung zwischen dem ersten Antriebsstrang und dem zweiten Antriebsstrang. Die Drehstange bildet einerseits den Teil des ersten Antriebsstranges, der zur Rotation des Zugdornes führt. Andererseits wird sie mit dem zweiten Antriebsstrang axial fest verbunden, so daß bei einer Bewegung des Antriebsteils die ausrückbare Kupplung positionsabhängig ausgerückt werden kann. Das Ausrücken erfolgt dann, wenn der Axialanschlag der Drehstange den notwendigen axialen Druck auf das ausrückbare Teil der Kupplung ausübt. Umgekehrt kann natürlich bei einer entsprechenden Bewegung der Drehstange in die andere Richtung das ausrückbare Teil der Kupplung ortsfest verbleiben, weil die Drehstange in diesem Bereich axial gegen dieses Teil der Kupplung bewegbar ist.

Vorzugsweise ist die Drehstange mit dem Abtriebsteil drehfest verbunden. Über diese Verbindung wird die Rotationsbewegung auf den Zugdorn übertragen. Der Abtriebsteil ist dann ein dem ersten und dem zweiten Antriebsstrang gemeinsames Element.

Auch ist von Vorteil, wenn die Drehstange zumindest durch einen Teil des zweiten Antriebsstranges hindurchgeführt ist. Dies ermöglicht einerseits eine sehr platzsparende Bauweise. Zum anderen können die Zugkräfte in Umfangsrichtung gleichmäßig verteilt auf den Zugdorn aufgebracht werden, so daß sich keine Schiefstellungen ergeben, die wiederum die Zuverlässigkeit der Befestigung der Blindnietmutter stören könnten.

Vorzugsweise liegt der Abtriebsteil in seiner Ruheposition unter der Wirkung einer Feder an einem Anschlag an, der in Axialrichtung, insbesondere von außen, verstellbar ist. Über die Verstellung des Anschlages läßt sich somit der Leerhub einstellen. Der Anschlag bestimmt nämlich die Ruheposition des Abtriebsteils, also die Position, die der Abtriebsteil einnimmt, wenn er nicht vom Antriebsteil bewegt worden ist und damit auch den Bewegungsbeginn des Abtriesbteils.

Vorzugsweise weist der Abtriebsteil zur Aufnahme des Zugdorns ein Gewinde auf, wobei der Zugdorn und der Abtriebsteil Drehmomentangriffsflächen aufweisen, die zueinander ausrichtbar sind und ein Schieber vorgesehen ist, der auf die Drehmomentangriffsflächen von Zugdorn und Abtriebsteil schiebbar ist. Beim Wechseln zwischen unterschiedlichen Blindnietmuttern-Größen ist in vielen Fällen auch ein Wechsel des Zugdorns erforderlich. Mit dieser Ausgestaltung läßt sich dieser Wechsel relativ leicht und schnell bewerkstelligen. Es muß lediglich ein Schieber axial verschoben werden, so daß er eine Drehmomentangriffsfläche des Zugdorns frei gibt. Danach kann der Zugdorn heraus- und ein anderer Zugdorn hineingeschraubt werden. Wenn nun der eingeschraubte Zugdorn mit seiner Drehmomentangriffsfläche zur Drehmomentangriffsfläche des Abtriebsteils ausgerichtet ist, kann der Schieber wieder in seine ursprüngliche Position verbracht werden. In diesem Fall wirkt er auf die Drehmomentangriffsfläche und hält damit den Zugdorn in der eingestellten Position. Als Drehmomentangriffsflächen können beispielsweise übereinstimmende Außensechskante verwendet werden. Der Schieber ist dann nach Art eines Hohlzylinders mit einem Innensechskant ausgebildet.

Hierbei ist bevorzugt, daß der Schieber in Axialrichtung arretierbar ist. Auch bei mechanischen Belastungen, wie sie durch Stöße oder ähnliches auftreten, kann der Schieber nicht versehentlich verschoben werden, was zu einer Lösung des Zugdornes führen könnte.

Vorzugsweise weist der zweite Antriebsstrang einen Kugelgewindetrieb auf, dessen Gewindespindel unverdrehbar gehalten ist und dessen Gehäuse antreibbar ist. Dies hat den Vorteil, daß über die Gewindespindel unmittelbar die axiale Bewegung erzeugt werden kann. Wenn die Drehstange durch den Teil des zweiten Antriebsstranges hindurchgeführt ist, weist die Gewindespindel eine Axialbohrung zur Aufnahme der Drehstange auf. Hierin ist die Drehstange dann drehbar gelagert.

Mit Vorteil betätigt die Steuereinrichtung nach einer ersten Betätigung eines Schalters den Motor und setzt ihn nach einer vorbestimmten Anzahl von Umdrehungen still. Diese Betätigung dient dann zum Einschrauben des Zugdorns in die Blindnietmutter. Hierbei ist die vorbestimmte Anzahl von Umdrehungen so gewählt, daß der Zugdorn auf jeden Fall zuverlässig in die Blindnietmutter hineingeschraubt werden kann. Gegebenenfalls kann die Umdrehungsanzahl in Abhängigkeit von der verwendeten Blindnietmutter vorgegeben werden. Alternativ dazu kann man eine feste Anzahl von Umdrehungen vorgeben, mit der alle Muttern unabhängig von ihrer Größe ausreichend auf den Zugdorn aufgeschraubt werden. In der Regel sind sogar mehr Umdrehungen vorgesehen, als notwendig sind, um den Zugdorn vollständig in die Blindnietmutter einzuschrauben. Diese Sicherheitsreserve ist problemlos verwendbar, weil nach Anlage der Blindnietmutter an das Setzgerät eine weitere Rotation des Zugdornes durch die Rutschkupplung verhindert werden kann.

Vorzugsweise ist der Leerhub größer als der Nutzhub. Dies führt zwar zu einer vermehrten Bewegung des Motors und damit zu einem höheren Energieverbrauch. Andererseits erfolgt die Bewegung des Motors aber praktisch ohne Last, so daß der Zuwachs des Energieverbrauchs praktisch vernachlässigbar ist. Durch diese Maßnahme kann man aber mit hoher Zuverlässigkeit ein Ausrücken der ausrückbaren Kupplung erreichen, bevor der Zugvorgang einsetzt und zwar unabhängig von der Größe der Blindnietmuttern. Die Energie, die man hierbei einspart, ist in der Regel größer als die zuvor aufgewendete Energie, weil der Stromverbrauch vieler elektrischer Motoren nicht linear mit der Belastung, sondern stärker ansteigt.

Die Erfindung wird im folgenden anhand eines bevorzugten Ausführungsbeispiels in Verbindung mit der Zeichnung beschrieben. Hierin zeigen:
- Fig. 1: eine Seitenansicht eines Blindnietmutter-Setzgeräts, teilweise im Aufriß,
- Fig. 2: eine vergrößerte Ansicht von Teilen, die einen ersten Antriebsstrang bilden, teilweise im Aufriß,
- Fig. 3: eine vergrößerte Ansicht von Teilen aus Fig. 1, die einen zweiten Antriebsstrang bilden, teilweise im Aufriß,
- Fig. 4: Teile des ersten Antriebsstranges aus Fig. 2, teilweise im Aufriß,
- Fig. 5: eine Draufsicht auf eine Kupplung und
- Fig. 6: eine schematische Darstellung der beiden Antriebsstränge.

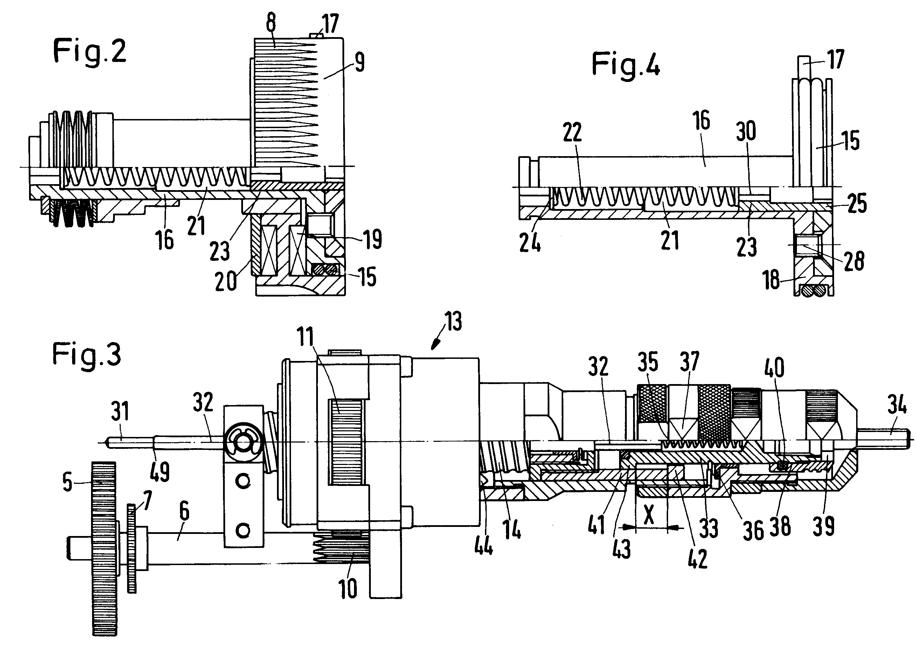

Ein Blindnietmutter-Setzgerät 1 weist einen Motor 2 mit einem Abtriebsritzel 3 auf, der in einem Gehäuse 4 angeordnet ist. Das Abtriebsritzel 3 steht mit einem Übertragungsritzel 5 in Eingriff, das drehfest auf einer Welle 6 angeordnet ist. Auf der Welle 6 ist ein Zahnrad 7 drehfest befestigt, das mit einer Außenverzahnung 8 eines Kupplungsgehäuses 9 (Fig. 2) kämmt.

Die Welle 6 weist ferner eine Verzahnung 10 auf, die mit einer Außenverzahnung 11 auf einem Gehäuse 12 eines Kugelgewindetriebs 13 kämmt (Fig. 3). Der Kugelgewindetrieb weist eine Gewindespindel 14 auf, die undrehbar, aber unter der Wirkung der Rotation des Gehäuses 12 axial verschiebbar im Gehäuse 4 gelagert ist.

Das Kupplungsgehäuse 9 überträgt seine Drehung über eine Schlingfeder 15 auf eine Welle 16. Hierzu weist die Schlingfeder eine Nase 17 auf, die in das Gehäuse 9 eingesteckt ist. Die Schlingfeder ist um einen Antriebsflansch 18 mit einer vorbestimmten Vorspannung herumgewickelt. Bei einer Drehung des Gehäuses 9 im Uhrzeigersinn (in Fig. 2 von links gesehen) nimmt daher die Schlingfeder 15 durch Reibung die Welle 16 mit, solange das auf die Welle 16 wirkende Gegenmoment nicht größer als das Reibmoment ist. Wird jedoch die Welle 16 gebremst, drillt sich die Schlingfeder 15 auf, d.h. sie weitet sich auf, so daß sie auf dem mit der Welle drehfest verbundenen Antriebsflansch 18 rutscht und nur noch ein ganz wesentlich kleineres Moment überträgt. Wird jedoch das Gehäuse 9 in die andere Richtung gedreht, zieht sich die Schlingfeder 15 um den Antriebsflansch 18 fest und überträgt praktisch verlustfrei das Drehmoment auf die Welle 16. Die Welle 16 ist dementsprechend über Axiallager 19 gegenüber dem Kupplungsgehäuse 9 abgestützt. Eine Scheibe 20 dient als Anlage am Gehäuse 4.

Die Welle 16 ist hohl, d.h. sie weist einen Hohlraum 21 auf. In diesem Hohlraum 21 ist eine Druckfeder 22 angeordnet, die ein ausrückbares Kupplungsteil 23 in Axialrichtung beaufschlagt. Am anderen Ende ist die Feder an einer Scheibe 24 abgestützt. Das ausrückbare Kupplungsteil 23 ist axial beweglich. Es weist eine Nase 25 auf, die in eine Öffnung 26 eines festen Kupplungsteils 27 einführbar ist. Der feste Kupplungsteil 27 ist in Fig. 5 in Draufsicht dargestellt. Er ist mit Hilfe von Schrauben 28 drehfest mit dem Antriebsflansch 18 der Welle 16 verbunden. Wie aus Fig. 5 ersichtlich ist, füllt die Nase 25 die Öffnung 26 nicht aus. Es ist vielmehr möglich, daß diese Nase 25 in der Öffnung 26 um mehr als 200° verdreht wird, im vorliegenden Beispiel sogar um etwa 240°. Die Nase 25 kommt in der dargestellten Antriebsstellung an einem Vorsprung 29 des festen Kupplungsteils 27 zur Anlage. Eine Drehung des festen Kupplungsteils 27 überträgt sich damit an den ausrückbaren Kupplungsteil 23. Sobald jedoch der ausrückbare Kupplungsteil 23 soweit axial verschoben ist (in Fig. 2 und 4 nach links), daß seine Nase 25 nicht mehr mit dem Vorsprung 29 in Eingriff steht, wird eine Drehung der Welle 16 nicht mehr auf das ausrückbare Kupplungsteil 23 übertragen.

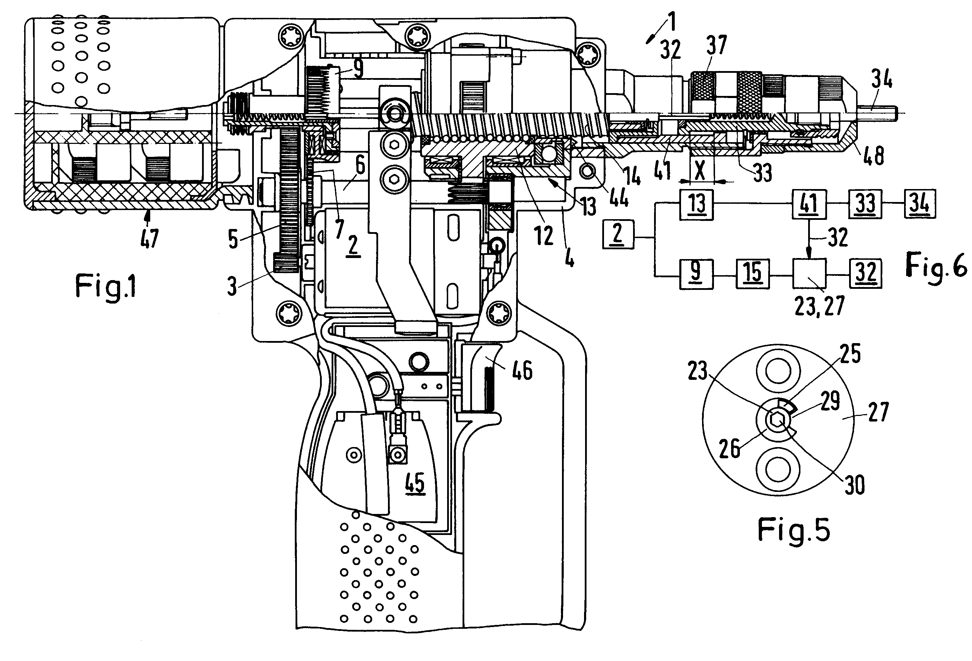

Der ausrückbare Kupplungsteil 23 weist einen Innensechskant 30 auf. Wenn die in Fig. 2 dargestellte Kupplung in der in Fig. 1 dargestellten Position befestigt ist, kommt ein mit einem Außensechskant 31 versehenes Ende einer Drehstange 32 in Eingriff mit dem Innensechskant 30 des Kupplungsteils 23. Die beiden Teile 32, 23 sind demnach drehfest verbunden. Die Drehstange 32 ist in dem Kupplungsteil 23 über eine gewisse Strecke axial verschiebbar und zwar solange, bis bei einer Bewegung nach links in Fig. 3 ein durch den Übergang vom Außensechskant 31 zum Zylinderumfang der Drehstange 32 gebildeter Vorsprung oder Anschlag 49 zur Anlage an den Kupplungsteil 23 kommt. Eine weitere Bewegung der Drehstange 32 nach links führt dann zum Ausrücken des Kupplungsteils 23 aus dem Kupplungsteil 27.

Die Drehstange 32 steht an ihrem anderen Ende in drehfestem, aber axial veränderbaren Eingriff mit einem Abtriebsteil 33, das seinerseits wieder drehfest mit einem Zugdorn 34 verbunden ist. In Axialrichtung ist zwischen der Drehstange 32 und dem Abtriebsteil 33 eine Druckfeder 35 vorgesehen, die den Abtriebsteil gegen einen Anschlag 36 drückt. Der Anschlag 36 bestimmt die Ruheposition des Abtriebsteils 33. Der Anschlag 36 kann durch Verdrehen einer Mutter 37 auf dem Gehäuse 4 von außen verstellt werden.

Der Zugdorn ist in das Abtriebsteil 33 eingeschraubt. Um ein Verdrehen des eingeschraubten Zugdorns 34 im Abtriebsteil 33 zu verhindern, ist ein auf dem Abtriebsteil 33 axial beweglicher Schieber 38 vorgesehen, der einen Innensechskant aufweist. Der Zugdorn 34 weist etwa in der axialen Mitte, also zwischen seinem Befestigungsgewinde und seinem Zuggewinde, einen Außensechskant 39 auf, der mit einem entsprechenden Außensechskant auf den Abtriebsteil 33 zur Deckung bringbar ist. Wenn der Schieber 38 dann nach rechts geschoben wird, wirkt er auf die Drehmomentangriffsflächen des Außensechskants 39, so daß sich der Zugdorn 34 im Abtriebsteil 33 nicht mehr verdrehen kann. Ein Rastring 40 sorgt dafür, daß der Schieber 38 in der eingenommenen axialen Position verbleibt. Durch diese Ausgestaltung ist ein relativ schnelles Wechseln des Zugdorns 34 und damit eine Anpassung an unterschiedliche Muttergrößen möglich.

Die in Fig. 2 dargestellte Kupplungseinrichtung bildet zusammen mit der Drehstange 32 und dem Abtriebsteil 33 einen ersten Antriebsstrang, mit dessen Hilfe eine Drehbewegung vom Motor 2 auf den Zugdorn 34 übertragen werden kann.

Ein zweiter Antriebsstrang weist den Kugelgewindetrieb 13 mit seiner Spindel 14 auf. Die Spindel 14 ist mit einem Antriebsteil 41 axial fest verbunden. Der Antriebsteil umgibt zumindest auf einem Teil seiner axialen Länge den Abtriebsteil 33. Der Antriebsteil 41 weist einen nach innen ragenden Vorsprung 42 auf, der an einer nach außen ragenden Schulter des Abtriebsteils 33 zur Anlage bringbar ist. Bevor jedoch der Vorsprung 42 an der Schulter 43 zur Anlage kommt, muß der Antriebsteil 41 einen Leerhub zurücklegen, der mit "x" gekennzeichnet ist. Sobald der Vorsprung 42 an der Schulter 43 zur Anlage gekommen ist, wird der Abtriebsteil 33 axial nach links bewegt. Durch diese Bewegung wird auch der Zugdorn 34 in das Gehäuse 4 hineingezogen. Er kann damit eine Zugkraft auf die Blindnietmutter ausüben.

Der Antriebsteil 41 wird bei jedem Setzvorgang bis in seine hintere Endlage verbracht, in der er einen Endlagenschalter 44 betätigt.

Die Drehstange 32 ist axial fest mit dem Antriebsteil 41 verbunden. Sie läßt sich allerdings im Antriebsteil 41 drehen. Die Drehstange 32 folgt damit den axialen Bewegungen des Antriebsteil 41. Wenn nun die Drehstange 32 in Fig. 3 nach links bewegt wird, stößt in einer bestimmten Stellung der Vorsprung 49 gegen das Kupplungsteil 23, das bei einer weiteren Bewegung der Drehstange 32 nach links aus dem Kupplungsteil 27 herausgedrückt wird. Dieses Ausrücken der Kupplung erfolgt, bevor der Vorsprung 42 an der Schulter 43 zur Anlage gekommen ist.

Der Motor 2 ist mit einer Steuereinrichtung 45 verbunden, mit der auch der Endlagenschalter 44 und ein Betätigungsschalter 46 verbunden ist.

Das Setzgerät arbeitet wie folgt: In Abhängigkeit von der zu vernietenden Blindnietmutter, beispielsweise in Abhängigkeit von deren Durchmesser, Länge und Material, wird ein Zugdorn 34 gewählt. Weitere Zugdorne mit entsprechenden Mundstücken sind in einem Magazin 47 am anderen Ende des Blindnietmutter-Setzgeräts 1 angeordnet. Ferner wird über die Mutter 37 der Leerhub "x" zwischen dem Antriebsteil 41 und dem Abtriebsteil 33 verstellt. Hierdurch wird der gewünschte Setzhub eingestellt. Nun kann die Arbeit mit der zu setzenden Blindnietmutter beginnen. Die Blindnietmutter wird auf den Zugdorn 34 aufgesetzt. Der Schalter 46 wird betätigt. Die Steuereinrichtung 45 dreht nun den Motor 2 solange, bis der Zugdorn 34 eine vorbestimmte Anzahl von Umdrehungen durchgeführt hat. Diese Anzahl ist so bemessen, daß die Blindnietmutter in jedem Fall sicher auf dem Zugdorn 34 aufgeschraubt ist. Aus Sicherheitsgründen wird man daher einige Umdrehungen mehr vorsehen, als eigentlich zum Aufschrauben der Blindnietmutter erforderlich wären.

Sobald die Blindnietmutter am Mundstück 48 des Setzgeräts 1 anliegt, ist ein weiteres Verdrehen des Zugdorns 34 nicht mehr möglich. Die Mutter übt damit ein größeres Gegenmoment auf den Zugdorn 34 auf. Dieses Gegenmoment wird über die Drehstange 32 auch auf die Welle 16 übertragen. Die Schlingfeder 15 weitet sich ein wenig auf und beginnt zu rutschen. Das "Grenzmoment" wird durch die Vorspannung definiert mit dem die Schlingfeder 15 am Antriebsflansch 18 anliegt. Es muß groß genug sein, um das Einschrauben des Zugdorns 34 in die Mutter zu ermöglichen, aber auch klein genug, um eine Beschädigung der Mutter durch vorzeitiges Stauchen am Mundstück zu vermeiden.

Gleichzeitig mit dem Drehen beginnt der Antriebsteil 41 eine Bewegung nach links. Hierbei verschiebt er die Drehstange 32 ebenfalls nach links.

Sobald die Blindnietmutter auf den Zugdorn 34 aufgeschraubt ist, was für den Bediener daran erkenntlich ist, daß der Motor aufgehört hat, sich zu drehen, kann die Blindnietmutter in eine vorgefertigte Bohrung in einem Werkstück eingeführt werden. Der Bediener betätigt nun erneut den Betätigungsschalter 46. Die Steuereinrichtung 45 steuert nun wiederum den Motor 2 an. Hierbei wird nun, übersetzt durch den Kugelgewindetrieb 13, der Antriebsteil 41 weiter nach links verschoben und mit ihm die Drehstange 32. Bevor nun der Vorsprung 42 des Antriebsteils 41 zur Anlage an die Schulter 43 des Abtriebsteils 33 gelangt, hat die Drehstange 32 die Kupplung 23, 27 ausgerückt. Hiermit ist jegliche Übertragung einer Drehbewegung auf den Zugdorn 34 unterbrochen. Die gesamte Kraft des Motors 2 kann nun dazu verwendet werden, den Zugdorn 34 axial zu ziehen. Es entstehen auch keine Verluste mehr durch die Reibung des Antriebsflansches 18 an der Schlingfeder 15.

Der Motor 2 wird nun solange in die eine Richtung gedreht, bis das Antriebsteil 41 oder ein mit ihm fest verbundenes Teil den Endlagenschalter 44 betätigt. In diesem Moment steuert die Steuereinrichtung 45 den Motor 2 um, der dann beginnt, den Antriebsteil 41 wieder in die andere Richtung zu bewegen. Hierbei wird durch die Drehstange 32 und die Feder 35 der Abtriebsteil 33 ebenfalls nach rechts verschoben. Die Blindnietmutter wird damit von dem Mundstück 48 abgedrückt. Der Rückhub des Antriebsteils entspricht dem Setzhub. Er ist damit so groß, daß eine zuverlässige Entlastung des Zugdorns 34 erfolgt. Sobald die Umsteuerung des Motors 2 erfolgt, weiß der Bediener, daß das Setzen der Blindnietmutter erfolgreich war, d.h. der Setzhub hatte die ausreichende Länge. Dies ist insbesondere bei der Verwendung von Setzgeräten von Vorteil, die mit tragbaren Energiespeichern, wie Batterien oder Akkumulatoren arbeiten. Da am Ende des Setzhubes die größte Kraft aufzubringen ist und damit auch der größte Stromverbrauch für den Motor eintritt, kann es sein, daß eine Batterie oder Akkumulator mit einer zu geringen Ladung nicht mehr die Kraft hat, den Motor bis zum Ende des Setzhubes anzutreiben. Wenn also der Motor nicht umgesteuert wird, ist dies ein Zeichen dafür, daß die Endlage nicht erreicht worden ist, also der Setzhub nicht die erforderliche Länge hatte.

Gegebenenfalls kann für Notfälle die Möglichkeit vorgesehen sein, daß der Setzhub durch Loslassen des Betätigungsschalters 46 abgebrochen wird und der Antriebsteil 41 dann automatisch in seine vordere Endlage zurückgefahren wird.

Wenn aber die Umsteuerung erfolgt ist, also der Zugdorn 34 entlastet ist, dreht der Motor 2 so lange weiter, bis sich der Antriebsteil 41 in seiner vorderen Endlage befindet, also in Fig. 1 ganz rechts. Er dreht andererseits das Kupplungsgehäuse 9 weiter. Zu einem bestimmten Zeitpunkt kommt die Nase 25 des Kupplungsteils 23 in die Öffnung 26 des Kupplungsteils 27 und damit zur Anlage an den Vorsprung 29. Da sich der Vorsprung 29 dreht, wird die Drehbewegung auch auf die Drehstange 32 übertragen. Dies führt zu einer Drehbewegung des Zugdorns 34, der damit aus der Blindnietmutter herausgeschraubt wird. Die Schlingfeder 15 wird nun in die entgegengesetzte Richtung beaufschlagt, d.h. sie zieht sich um den Antriebsflansch 18 herum fest, so daß hier praktisch kein Drehmomentverlust auftritt. Sobald der Zugdorn aus der Blindnietmutter herausgeschraubt ist, kann er für das Setzen eine neue Blindnietmutter verwendet werden.

## Patentansprüche

1. Blindnietmutter-Setzgerät (1) mit einer Zugspindel (34), einem Motor (2), einem ersten Antriebsstrang (3,5,7,8,9,17,15,16,18,27,25,23) zwischen Motor (2) und Zugspindel (34) zum Erzeugen einer Rotationsbewegung der Zugspindel, wobei der erste Antriebsstrang unterbrechbar ist, und einem zweiten Antriebsstrang (2,3,5,6,10,11,13,14,41,33), wobei der zweite Antriebsstrang einen Antriebsteil (41) und einen Abtriebsteil aufweist (33) und der Antriebsteil (41) auf einer Bewegungsbahn bewegbar ist, die einen Leerhub (x) gegenüber dem Abtriebsteil (33) und einen Nutzhub aufweist, dadurch gekennzeichnet, daß der Endpunkt (44) der Bewegungsbahn fest vorgegeben ist, daß der Nutzhub unmittelbar am Endpunkt (44) endet und daß der Leerhub (x) veränderbar ist.

2. Gerät nach Anspruch 1, dadurch gekennzeichnet, daß eine Steuereinrichtung (45) vorgesehen ist, die den Motor (2) in die entgegengesetzte Richtung umsteuert, sobald der Antriebsteil (41) den Endpunkt (44) der Bewegungsbahn erreicht.

3. Gerät nach Anspruch 1 oder 2, dadurch gekennzeichnet, daß der erste Antriebsstrang eine Schlingfederkupplung (15) als richtungsabhängig wirkende Rutschkupplung aufweist.

4. Gerät nach Anspruch 3, dadurch gekennzeichnet, daß der erste Antriebsstrang zusätzlich eine ausrückbare Kupplung (23, 27) aufweist.

5. Gerät nach Anspruch 4, dadurch gekennzeichnet, daß die ausrückbare Kupplung (23, 27) bei einer vorbestimmten Position des Antriebsteils (41) ausrückt, wobei der Antriebsteil (41) diese Position noch während des Leerhubs (x) erreicht.

6. Gerät nach Anspruch 4 oder 5, dadurch gekennzeichnet, daß die ausrückbare Kupplung (23, 27) zwei axial gegeneinander bewegbare Teile aufweist, die im eingerückten Zustand um mehr als 200° gegeneinander verdrehbar sind.

7. Gerät nach einem der Ansprüche 4 bis 6, dadurch gekennzeichnet, daß der Antriebsteil (41) axial fest mit einer Drehstange (32) verbunden ist, die mit dem ausrückbaren Teil (23) der Kupplung (23, 27) drehfest verbunden ist, wobei die Drehstange (32) einen Axialanschlag (49) aufweist, bis zu dem hin das ausrückbare Teil (23) der Kupplung (23, 27) und die Drehstange (32) axial gegeneinander bewegbar sind.

8. Gerät nach Anspruch 7, dadurch gekennzeichnet, daß die Drehstange (32) mit dem Abtriebsteil (33) drehfest verbunden ist.

9. Gerät nach Anspruch 7 oder 8, dadurch gekennzeichnet, daß die Drehstange (32) zumindest durch einen Teil des zweiten Antriebsstranges hindurchgeführt ist.

10. Gerät nach einem der Ansprüche 1 bis 9, dadurch gekennzeichnet, daß der Abtriebsteil (33) in seiner Ruheposition unter der Wirkung einer Feder (35) an einem Anschlag (36) anliegt, der in Axialrichtung, insbesondere von außen, verstellbar ist.

11. Gerät nach einem der Ansprüche 1 bis 10, dadurch gekennzeichnet, daß der Abtriebsteil (33) zur Aufnahme des Zugdorns (34) ein Gewinde aufweist, wobei der Zugdorn und der Abtriebsteil Drehmomentangriffsflächen (39) aufweisen, die zueinander ausrichtbar sind und ein Schieber (38) vorgesehen ist, der auf die Drehmomentangriffsflächen (39) von Zugdorn (34) und Abtriebsteil (33) schiebbar ist.

12. Gerät nach Anspruch 11, dadurch gekennzeichnet, daß der Schieber (38) in Axialrichtung arretierbar ist.

13. Gerät nach einem der Ansprüche 1 bis 12, dadurch gekennzeichnet, daß der zweite Antriebsstrang einen Kugelgewindetrieb (13) aufweist, dessen Gewindespindel (14) unverdrehbar gehalten ist und dessen Gehäuse (12) antreibbar ist.

14. Gerät nach einem der Ansprüche 1 bis 13, dadurch gekennzeichnet, daß die Steuereinrichtung (45) nach einer ersten Betätigung eines Schalters (46) den Motor (2) betätigt und nach einer vorbestimmten Anzahl von Umdrehungen stillsetzt.

15. Gerät nach einem der Ansprüche 1 bis 14, dadurch gekennzeichnet, daß der Leerhub (x) größer als der Nutzhub ist.

## Claims

1. Blind-rivet nut setting device (1) with a feed shaft (34), a motor (2), a first drive train (3,5,7,8,9,17,15,16,18,27,25,23) between motor (2) and feed shaft (34) for generating a rotating movement of the feed shaft, the first drive train being interruptable, and a second drive train (2,3,5,6,10,11,13,14,41,33) having a drive portion (41) and a drive take-off portion (33), and the drive portion (41) being movable in a path which has a return stroke (x)relative to the drive take-off portion (33), and a setting stroke, characterised in that the end point (44) of the path of movement is reliably predetermined, in that the setting stroke terminates directly at the end point (44), and in that the return stroke (x) is variable.

2. Device according to claim 1, characterised in that a control device (45) is provided, which reverses the motor (2) in the opposite direction, as soon as the drive portion (41) reaches the end point (44) of the path of movement.

3. Device according to claim 1 or 2, characterised in that the first drive train has a wrap spring clutch (15) as a slip clutch operating in dependence on position.

4. Device according to claim 3, characterised in that the first drive train has in addition a disengageable clutch (23, 27).

5. Device according to claim 4, characterised in that the disengageable clutch (23, 27) disengages at a predetermined position of the drive portion (41), the drive portion (41) reaching this position during the return stroke (x).

6. Device according to claim 4, characterised in that the disengageable clutch (23, 27) has two parts movable axially relative to one another, which are rotatable in the engaged condition through more than 200° relative to one another.

7. Device according to one of claims 4 to 6, characterised in that the drive portion (41) is axially securely fixed to a rotary rod (32), which is non-rotarily connected to the disengageable portion (23) of the clutch (23, 27), the rotary rod (32) having an axial stop means (19), the disengageable portion of the clutch 23, 27) and the rotary rod (32) being movable as far as said stop means (19).

8. Device according to claim 7, characterised in that the rotary rod (32) is non-rotarily connected to the drive portion (33).

9. Device according to claim 7 or 8, characterised in that the rotary rod (32) is passed through at least a portion of the second drive train.

10. Device according to one of claims 1 to 9, characterised in that the drive take-off portion (33), in its inoperative position, bears against a stop means (36), under the action of a spring (35), said stop (36) being adjustable in the axial direction, particularly from the exterior.

11. Device according to one of claims 1 to 10, characterised in that the drive take-off portion (33), in order to accommodate the mandrel (34), has a thread, the mandrel and the drive take-off portion having torque application surfaces (39) which nay be aligned on one another, and a slider (38) is provided, which may be pushed on to the torque application surfaces (39) of mandrel (34) and drive take-off portion (33).

12. Device according to claim 11, characterised in that the slider (38) is blockable in the axial direction.

13. Device according to one of claims 1 to 12, characterised in that the second drive train has a ball screw drive (13) the threaded spindle (14) of which is non-rotatably secured, and the housing (12) of which is drivable.

14. Device according to one of claims 1 to 13, characterised in that the control device (45), after a first actuation of the switch (46), actuates the motor (2), and stops it after a predetermined number of revolutions.

15. Device according to one of claims 1 to 14, characterised in that the return stroke (x) is greater than the setting stroke.

## Revendications

1. Appareil (1) pour poser des écrous-rivets aveugles, comportant une broche de traction (34), un moteur (2), un premier train d'entraînement (3, 5, 7, 8, 9, 17, 15, 16, 18, 27, 25, 23) entre le moteur (2) et la broche de traction (34) pour produire un mouvement de rotation de la broche de traction, dans lequel le premier train d'entraînement peut être interrompu, et comportant un second train d'entraînement (2, 3, 5, 6, 10, 11, 13, 14, 41, 33), ledit second train d'entraînement présentant un élément menant (41) et un élément mené (33) et l'élément menant (41) étant mobile sur une trajectoire de déplacement qui présente une course à vide (x) par rapport à l'élément mené (33) et une course utile, caractérisé en ce que le point final (44) de la trajectoire de déplacement est fixement déterminé, en ce que la course utile se termine directement au point final (44), et en ce que la course à vide (x) est variable.

2. Appareil selon la revendication 1, caractérisé en ce qu'il est prévu un dispositif de commande (45) qui inverse le moteur (2) dans la direction opposée dès que l'élément menant (41) atteint le point final (44) de la trajectoire de déplacement.

3. Appareil selon l'une ou l'autre des revendications 1 et 2, caractérisé en ce que le premier train d'entraînement présente un accouplement à ressort spiralé (15) en tant qu'accouplement à glissement agissant en dépendance de la direction.

4. Appareil selon la revendication 3, caractérisé en ce que le premier train d'entraînement présente en supplément un accouplement débrayable (23, 27).

5. Appareil selon la revendication 4, caractérisé en ce que l'accouplement débrayable (23, 27) débraye lors d'une position prédéterminée de l'élément menant (41), et en ce que l'élément menant (41) atteint cette position encore pendant la course à vide (x).

6. Appareil selon l'une ou l'autre des revendications 4 et 5, caractérisé en ce que l'accouplement débrayable (23, 27) présente deux éléments axialement mobiles l'un par rapport à l'autre, qui peuvent tourner de plus de 200° l'un par rapport à l'autre à l'état embrayé.

7. Appareil selon l'une quelconque des revendications 4 à 6, caractérisé en ce que l'élément menant (41) est relié axialement fixement à une barre tournante (32) qui est reliée solidairement en rotation à l'élément débrayable (23) de l'accouplement (23, 27), la barre tournante (32) présentant une butée axiale (19) jusqu'à laquelle l'élément débrayable (23) de l'accouplement (23, 27) et la barre tournante (32) sont mobiles axialement l'un par rapport à l'autre.

8. Appareil selon la revendication 7, caractérisé en ce que la barre tournante (32) est reliée solidairement en rotation à l'élément mené (33).

9. Appareil selon l'une ou l'autre des revendications 7 et 8, caractérisé en ce que la barre tournante (32) est guidée au moins à travers une partie du second train d'entraînement.

10. Appareil selon l'une quelconque des revendications 1 à 9, caractérisé en ce que dans sa position de repos, l'élément mené (33) s'appuie contre une butée (36) sous l'action d'un ressort (35), ladite butée étant réglable dans la direction axiale, en particulier depuis l'extérieur.

11. Appareil selon l'une quelconque des revendications 1 à 10, caractérisé en ce que l'élément mené (33) présente un pas de vis pour recevoir le mandrin de traction (34), le mandrin de traction et l'élément mené présentant des surfaces d'attaque de couple de rotation (39) susceptibles d'être orientées l'une par rapport à l'autre, et en ce qu'il est prévu un poussoir (38) susceptible d'être poussé sur les surfaces d'attaque de couple de rotation (39) du mandrin de traction (34) et de l'élément mené (33).

12. Appareil selon la revendication 11, caractérisé en ce que le poussoir (38) peut être arrêté en direction axiale.

13. Appareil selon l'une quelconque des revendications 1 à 12, caractérisé en ce que le second train d'entraînement présente une transmission à vis à billes (13) dont la broche filetée (14) est retenue de manière à ne pas tourner, et dont le boîtier (12) peut être entraîné.

14. Appareil selon l'une quelconque des revendications 1 à 13, caractérisé en ce que le dispositif de commande (45) actionne le moteur (2) après un premier actionnement d'un interrupteur (46), et l'arrête après un nombre prédéterminé de tours.

15. Appareil selon l'une quelconque des revendications 1 à 14, caractérisé en ce que la course à vide (x) est supérieure à la course utile.
